Europäisches Patentamt

European Patent Office

Office européen des brevets

(11) Publication number: 0 495 272 A1

# EUROPEAN PATENT APPLICATION

(21) Application number: 91300276.2

(22) Date of filing: 15.01.91

(51) Int. Cl.5: B23P 19/00

(43) Date of publication of application:
22.07.92 Bulletin 92/30

(84) Designated Contracting States:
DE FR GB

(71) Applicant: International Business Machines
Corporation
Old Orchard Road
Armonk, N.Y. 10504(US)

(72) Inventor: Lees, Stuart
10 Broomberry Drive
Gourock, Inverclyde, Scotland PA19 1TY(GB)

(74) Representative: Killgren, Neil Arthur
IBM United Kingdom Limited Intellectual
Property Department Hursley Park
Winchester Hampshire SO21 2JN(GB)

(54) Assembly apparatus and method.

(57) An assembly apparatus (20) and method is provided for joining components (5,6) into a mating relationship, one of the components having a protrusion (15) extending therefrom, comprising:
means (1,2) for feeding the components into a pre-mating position;
means (7,8) for holding the components in the pre-mating position and releasing the components For urging into a loosely-mated position and towards a merging means (10) having a groove (16) for receiving the protrusion;
and
means (11) for drawing the components past the merging means, thereby squeezing the components into a tightly-mated position.

FIG. 1a

The invention relates to an assembly apparatus and method for joining components into a mating relationship, and especially to an assembly apparatus and method for joining components into a mating relationship when one of the components has a protrusion extending therefrom. The components to be joined may be of any kind but in particular could be keyboard button caps and keyboard button stems.

With the introduction of robotics it has been possible for many assembly tasks to he carried out in an accurate and repetitive manner, and in many cases for productivity to be increased relative to equivalent manual assembly methods. Many of these robotic methods involve components being picked up from an initial position, moved to another position, and then released in a controlled and accurate manner. US 4,587,703 refers to a robotic system for assembling a multiplicity of parts. The parts are disposed in a pick-up position and assembled in an assembly position spaced apart from the pick-up position. The preferred embodiment describes a robotic system consisting of a multifaceted rotatable turret coupled to the arm of a programmably controlled robot for picking up a plurality of distinguishable sculptured keyboard caps. Once the turret has picked up the required key caps it is moved by the arm to a position above a keyboard with key stems attached and then lowered, thereby inserting the key caps on the key stems.

In general, this type of robotic assembly apparatus, commonly referred to as 'pick and place' apparatus, has proved to be very efficient and reliable. However, when the components are delicate or are of an awkward shape, such as when a fragile protrusion extends from one of the components, pick and place apparatus can cause damage to the parts, which may subsequently be included with good assembled components.

Hence it is desired to provide an assembly apparatus and method in which fast and efficient assembly of components is effected, but with a reduced percentage of damaged products over conventional pick and place apparatus.

Viewed from a first aspect the present invention provides an assembly apparatus for joining components into a mating relationship, one of the components having a protrusion extending therefrom, comprising: means for feeding the components into a pre-mating position; means for holding the components in the pre-mating position and releasing the components for urging into a loosely-mated position and towards a merging means having a groove for receiving the protrusion; and means for drawing the components past the merging means, thereby squeezing the components into a tightly-mated position.

An advantage offered by the invention is that components are assembled in a fast and efficient way with a reduction of component damage over conventional pick and place methods. Another advantage is that the apparatus of the invention employs a smaller number of moving parts than in pick and place apparatus, thereby simplifying maintenance and operation, so reducing costs and increasing reliability. The small number of moving parts also enables the apparatus to be made smaller than pick and place apparatus and also gives rise to lower noise levels being produced.

In preferred embodiments a component his only one protrusion but in other embodiments a component could have a plurality of protrusions.

The means for feeding the components into the pre-mating position can be of any type so long as the components arrive in the pre-mating position in the correct orientation for mating. However, in preferred embodiments the means for feeding the components into the pre-mating position includes a channel system shaped such that the components will slide therealong only when in a predetermined orientation with respect to the channel system, so as to ensure that the components arrive in the pre-mating position in the correct orientation for mating. The channel system has the advantage that it is simple in construction, is not a moving part and hence is easily maintained, and does not involve mechanically handling the components, therefore reducing the likelihood of damage to the components.

In preferred embodiments, the means for feeding the components into the pre-mating position further includes means for producing a flow of moving gas for creating a force on the components directed so as to urge the components into the required pre-mating position. The advantage of this arrangement is that the force is reasonably gentle and no mechanical contact is made with the components, thus reducing the likelihood of damage.

The means for holding and releasing can include, for example, a retractable blade, or a plurality of retractable blades, interposed between the components for supporting the components in the pre-mating position, or movable arms to hold the components in the pre-mating position. In preferred embodiments the means for holding and releasing includes a retractable blade, which has the advantage of being a simple mechanical device employing few moving parts.

The means for holding and releasing can also include a block for retaining at least one of the components in the pre-mating position until the components have been urged into the loosely-mated position and an edge of the merging means for retaining ill the pre-mating position the components not to be held by the block, or call include gas suction jets or mechanical arms. In preferred embodiments the means for holding and releasing includes a block and an edge of the merging means. A block has the advantage of being a simple and cheap device, and employing an edge of the merging means is advantageous because the merging means is already present in the apparatus and hence no extra parts are required.

In preferred embodiments an actuator is employed to remove the blade and the block, the blade being removed before the block so as to enable the components to become loosely-mated before being urged towards the merging means.

The components can be urged into the loosely-mated position under the influence of any applied force. However, in preferred embodiments the components are urged into the loosely-mated position under the force exerted by gravity. This is advantageous because gravity provides a steady and reliable force without mechanical complexity.

The means for drawing the components past the merge head can be a belt, an arm to push the components, or a suctional force. In preferred embodiments the means for drawing the components past the merge head is a belt. A belt has the advantage that it draws the components smoothly past the merge head, whilst at the same time providing a surface against which the components can be squeezed so as to tightly-mate the components.

The merging means can comprise a merge head or a pneumatic cylinder or any other means that would effect the tightly-mated state of the components. In preferred embodiments the merging means comprises a merge head having a surface shaped to provide a varying gap between the merge head and the means for drawing, the surface comprising a ramped portion for receiving the components and leading to a merging point at which the gap is a minimum. This form of merge head has the advantage that the components are guided under the merging point in a controlled manner and are tightly-mated without any sudden force being applied to the components, and that none of the mating force is applied to the protrusion.

Also in preferred embodiments the merge head is free to move in a direction perpendicular to the means for drawing, and the surface further includes a low pressure portion on the opposite side of the merging point to the ramped portion at which the gap increases from the gap at the merging point. In this arrangement the mass of the merge head provides the merging force and determines the maximum force that can be applied to the components by the merging point. The low pressure portion has the advantage that it allows the merging point to apply the maximum force to each consecutive set of loosely-mated components in turn, since tightly-mated components in the low pressure region do not abut against the merge head, and so do not interfere with the merge head's operation.

Viewed from a second aspect the present invention provides an assembly method for joining components into a mating relationship, one of the components having a protrusion extending therefrom, comprising the steps of:
feeding the components into a pre-mating position;
holding the components in the pre-mating position;
releasing the components for urging into a loosely-mated position and towards a merging means with a groove for receiving the protrusion; and
drawing the components past the merging means so as to squeeze the components into a tightly-mated position.

The present invention will be described further, by way of example only, with reference to an embodiment thereof as illustrated in the accompanying drawings, in which:

Figures 1(a), 1(b), and 1(c) show side views of an embodiment in accordance with the present invention at different stages of production, in which keyboard button caps and keyboard button stems are the components to be assembled.

Figure 2(a) is a plan view of a piece of track used to feed the components into the pre-mating position as used in the embodiment.

Figure 2(b) is a plan view of the track used to feed the keyboard button caps into the pre-mating position.

Figure 2(c) is an end view of the track used to feed the keyboard button caps into the pre-mating position.

Figure 2(d) is an end view of the track used to feed the keyboard button stems into the pre-mating position.

Figure 3(a) shows one particular design of a merge head used in the embodiment.

Figure 3(b) shows another design of a merge head which could be used in the embodiment in place of the merge head shown in Fig 3(a).

Figure 3(c) shows a side view of the merge head as used in the preferred embodiment.

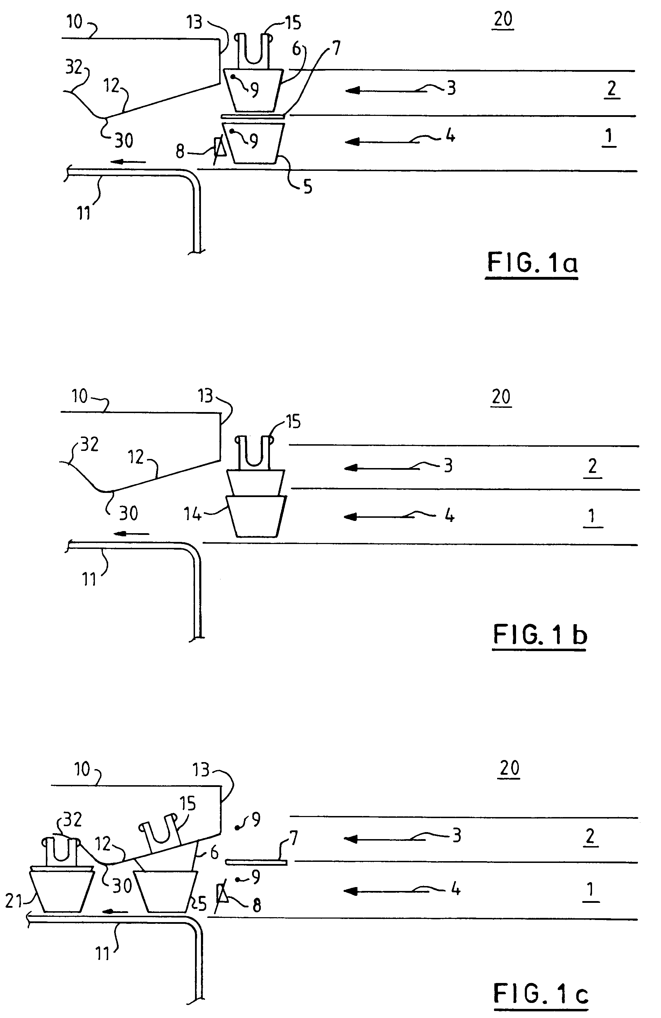

Figure 1(a) shows an assembly apparatus (20) for joining components (5,6) into a mating relationship wherein the components (5,6) to be assembled are keyboard button caps (5) (caps) and keyboard button stems (6) (stems). There is provided a first track (1) for feeding the caps (5) into a pre-mating position, and a second track (2) for feeding the stems (6) into the pre-mating position.

Also provided is a blade (7) for supporting the stem (6) in vertical alignment with the cap (5) at the pre-mating position. A block (8) retains the cap (5) in the pre-mating position while one edge (13) of a merge head (10) retains the stem (6) in the pre-mating position.

A Synchroflex (TM) timing belt (11) (belt) is used to draw the components past the merge head (10).

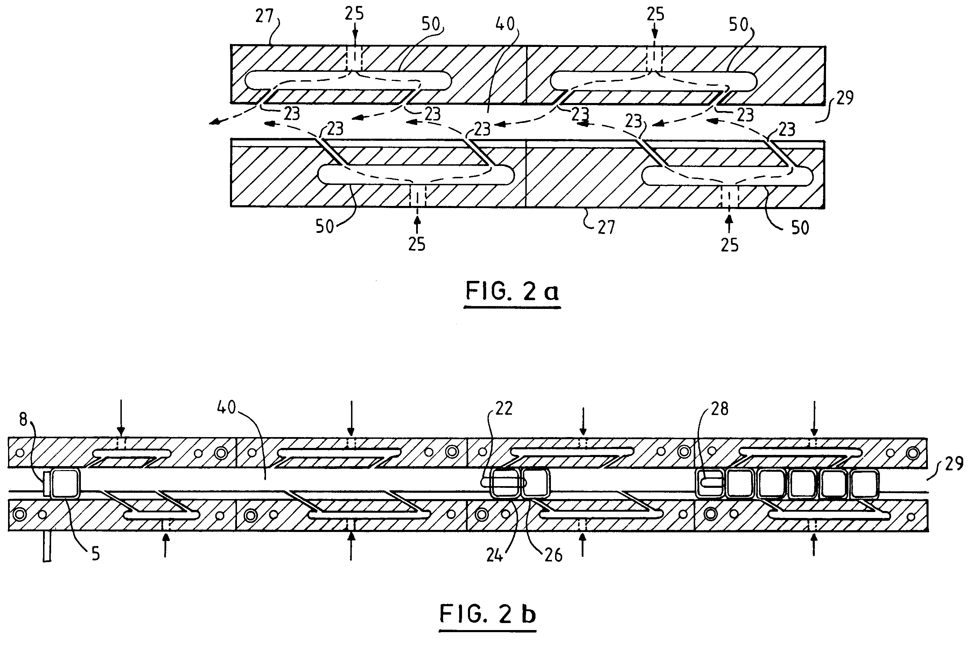

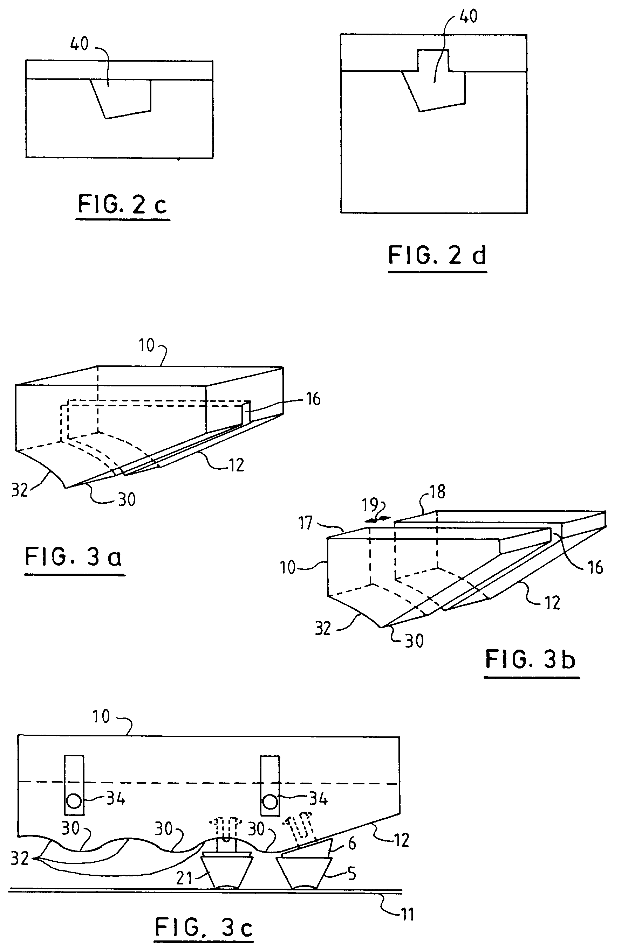

In operation the caps (5) and stems (6) are fed into a pre-mating position along their respective tracks (1,2). A piece of the track as used in the embodiment is shown in Figure 2(a). Each track (1,2) is formed from a number of sections (27), each section (27) containing two gas inlets (25). Gas passes through the inlets (25) into the corresponding chambers (50), each chamber having two outlets (23). The gas exits through the outlets (23) into the channel (40) in the directions shown by the arrows in Figure 2(a). The movement of the gas along the channel (40) creates a suction at the entrance (29) of the channel (40) (the Venturi effect) which causes the caps (5) or stems (6) to be drawn into the channel (40).

The channel (40) is shaped so that the components (5,6) can only enter the channel in one particular orientation and will keep that orientation while moving along the channel (40). Figures 2(c) and 2(d) show end views of the cap track (1) and stem track (2) respectively, in which the shape of the channel (40) can clearly be seen.

The track (1) used to feed the caps (5) into the pre-mating position is shown in Figure 2(b). The cap (5) is held by the block (8), and successive caps (24,26) are held at a vent (22) by the back pressure set up by the stationary cap (5). Subsequent caps are held near the entrance (29) of the channel (40) at a vent (28) by the back pressure created by the caps (24,26). When the cap (5) is released by the block (8) the back pressure gives way to the movement of gas along the channel thus moving all the caps forward one space, so that they occupy the position previously occupied by the preceding cap. The movement of gas along the channel also creates the required Venturi suction at the entrance (29) of the channel (40) thus drawing another cap into the channel (40).

Returning to Figure 1 (a) the cap (5) is held in the pre-mating position by the block (8) which protrudes from track (1). The stem (6) is held in the pre-mating position by one edge (13) of the merge head (10) and supported in vertical alignment above the cap (5) by the blade (7).

Two sensors (9), one on each of track (1) and track (2), detect that the cap (5) and stem (6) are in the correct pre-mating position and, if this is the situation, send a signal to an actuator which is used to retract the blade, thereby enabling the stem (6) to fall under the force of gravity into a loosely-mated relationship with the cap (5). The loosely-mated cap and stem (14) can be seen in Figure 1(b).

Having retracted the blade (7), the actuator withdraws the block (8) whereby the force created by the movement of air acts on the loosely-mated cap and stem (14) so as to move it onto the belt (11).

As the loosely-mated cap and stem (14) moves onto the belt (11) the protruding stem leg (15) is received in the groove (16) of the merge head (10). Figure 3(a) shows one design of such a groove (16). However it will be realised by someone skilled in the art that the desired groove (16) could also be formed by constructing the merge head (10) in two discrete parts (17,18), separated by a distance (19) corresponding to the desired groove width. This configuration is shown in figure 3(b).

The merge head (10) has a surface shaped so as to provide a varying gap between the merge head (10) and the belt (11), the surface comprising a ramped portion (12) for receiving the loosely-mated cap and stem (14) and for leading to a merging point (30) at which the gap is a minimum.

The merge head (10) is mounted on roller slides (34) (as shown in Figure 3(c)) so that it is free to move in a direction perpendicular to the belt (11). In this way the maximum force that can be applied by the merging point (30) to the loosely-mated components (14) is determined by the mass of the merge head (10), and the gap between the merging point (30) and the belt (11) can fluctuate to allow for fluctuations in the vertical height of the cap (5) and stem (6) combination when tightly-mated by the merging point (30).

Hence, as the belt (11) draws the loosely-mated cap and stem (14) through the merge head (10), the loosely-mated cap and stem (14) is guided by the ramped portion (12) under the merging point (30) whereby the stem (6) is squeezed into the cap (5), resulting in a tightly-mated relationship being formed between the stem (6) and cap (5). The tightly-mated cap and stem (21) can be seen in Figure 1(c).

The tightly-mated cap and stem (21) then passes into a low pressure portion (32) of the merge head (10) at which the gap increases from that at the merging point (30). This allows the merging point to apply the required force to a successive loosely-mated cap and stem (14) which may have a smaller vertical height when tightly-mated than the previous tightly-mated cap and stem (21).

The tightly-mated cap and stem (21) can then be drawn through a further number of merging points (30) and low pressure portions (32) as shown in Figure 3(c), so as to make sure that the tightly-mated relationship has been effected before it is fed from the merge head (10) to an inspection area and hence to subsequent use on an assembly line.

**Claims**

1. An assembly apparatus for joining components into a mating relationship, one of the components having a protrusion extending therefrom, comprising:

   means for feeding the components into a pre-mating position;

   means for holding the components in the pre-mating position and releasing the components for urging into a loosely-mated position and towards a merging means having a groove for receiving the protrusion; and

   means for drawing the components past the merging means, thereby squeezing the components into a tightly-mated position.

2. An assembly apparatus as claimed in claim 1, wherein the means for feeding the components into a pre-mating position comprises:

   means for producing a flow of moving gas for creating a force on the components directed so as to urge the components into the required pre-mating position; and

   a channel system shaped such that the components will slide therealong only when in a predetermined orientation with respect to the channel system, so as to ensure that the components arrive at the pre-mating position in the correct orientation for mating.

3. An assembly apparatus as claimed in claim 1 or claim 2, wherein the means for holding and releasing includes:

   a retractable blade interposed between the components for supporting the components in the pre-mating position.

4. An assembly apparatus as claimed in any preceding claim, wherein the means for holding and releasing includes:

   a block for retaining at least one of the components in the pre-mating position until the components have been urged into the loosely-mated position; and

   an edge of the merging means for retaining in the pre-mating position the components not to be held by the block.

5. An assembly apparatus as claimed in claim 3 and claim 4, wherein the means for holding and releasing further includes:

   an actuator for removing the blade and the block, the blade being removed before the block so as to enable the components to become loosely-mated before being urged towards the merging means.

6. An assembly apparatus as claimed in any preceding claim, wherein the components are urged into the loosely-mated position under the force exerted by gravity.

7. An assembly apparatus as claimed in any preceding claim, wherein the means for drawing the components past the merging means is a belt.

8. An assembly apparatus as claimed in any preceding claim, wherein the merging means comprises a merge head having a surface shaped to provide a varying gap between the merge head and the means for drawing, the surface comprising a ramped portion for receiving the components and leading to a merging point at which the gap is a minimum.

9. An assembly apparatus as claimed in Claim 8, wherein the merge head is free to move in a direction perpendicular to the means for drawing, and the surface further includes a low pressure portion on the opposite side of the merging point to the ramped portion at which the gap increases from the gap at the merging point.

10. An assembly apparatus as claimed in any preceding claim, wherein the components are a keyboard button cap and a keyboard button stem.

11. An assembly method for joining components into a mating relationship, one of the components having a protrusion extending therefrom, comprising the steps of:

    feeding the components into a pre-mating position;

    holding the components in the pre-mating position;

    releasing the components for urging into a loosely-mated position and towards a merging means with a groove for receiving the protrusion; and

    drawing the components past the merging means so as to squeeze the components into a tightly-mated position.

12. An assembly method as claimed in claim 11, wherein the components are urged into the loosely-mated position under the force exerted by gravity.

13. An assembly method as claimed in claim 11 or claim 12, wherein the components are a keyboard button cap and a keyboard button stem.

FIG. 1a

FIG. 1 b

FIG. 1c

EP 0 495 272 A1

FIG. 2 a

FIG. 2 b

40

## FIG. 2 c

40

## FIG. 2 d

10

16

32

30

12

## FIG. 3 a

19

18

17

10

16

32

30

12

## FIG. 3 b

10

34

34

30

30

30

6

32

21

5

11

12

## FIG. 3 c

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-4 090 295 (GOODYEAR) | 1,11,12 | B23P19/00 |
| A | * the whole document * | 6,7,8 | |
| | --- | | |
| A | FLEXIBLE AUTOMATION FUR FERTIGUNG, MONTAGE UND TRANSPORT. no. 5, September 1986, GRAFELFING DE pages 28 - 30; MILBERG, RIESE: 'Automatische Montage von Klipsen durch Industrieroboter ' * page 29, left column, line 15 - line 19 * | 2 | |
| | --- | | |
| A | FR-A-2 513 936 (BRISTOL-MEYERS) | | |
| | ----- | | |

TECHNICAL FIELDS
SEARCHED (Int. Cl.5 )

B23P

The present search report has been drawn up for all claims

| Place of search | Date of completion of the search | Examiner |
|---|---|---|
| THE HAGUE | 30 AUGUST 1991 | RIS M. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

......................................................................

& : member of the same patent family, corresponding
    document

EPO FORM 1503 03.82 (P0401)